# EUROPEAN PATENT SPECIFICATION

(11) **EP 3 391 628 B1**
(45) Date of publication and mention of the grant of the patent: **25.08.2021**
(21) Application number: 16876655.8
(22) Date of filing: 15.12.2016
(51) Int. Cl.: H04L 29/12, H04L 29/08, H04L 12/733

(54) **USE OF VIRTUAL ENDPOINTS TO IMPROVE DATA TRANSMISSION RATES**
VERWENDUNG VIRTUELLER ENDPUNKTE ZUR VERBESSERUNG DER DATENÜBERTRAGUNGSRATEN
UTILISATION DE POINTS D'EXTRÉMITÉ VIRTUELS POUR AMÉLIORER DES TAUX DE TRANSMISSION DE DONNÉES

(30) Priority: 18.12.2015 US 201514975341; 18.12.2015 US 201514975157
(43) Date of publication of application: 24.10.2018
(73) Proprietor: Amazon Technologies, Inc., Seattle, WA 98108-1226 (US)
(72) Inventor: PUCHALA, Katarzyna, Anna, Seattle WA 98109-5210 (US); ZHANG, Alex, Xiaoye, Seattle WA 98109-5210 (US); DUNLAP, David, Alexander, Seattle WA 98109-5210 (US); HOWARD, Craig, Wesley, Seattle WA 98109-5210 (US)
(74) Representative: D Young & Co LLP
(86) International application number: PCT/US2016/066848
(87) International publication number: WO 2017/106455

(56) References cited:
- US-A1- 2012 078 998
- US-A1- 2013 254 269
- US-A1- 2013 254 269
- US-A1- 2015 006 615
- US-A1- 2015 172 379
- US-A1- 2015 172 379
- US-A1- 2015 288 647

## Description

### BACKGROUND

Generally described, computing devices utilize a communication network, or a series of communication networks, to exchange data. Companies and organizations operate computer networks that interconnect a number of computing devices to support operations or provide services to third parties. The computing systems can be located in a single geographic location or located in multiple, distinct geographic locations (e.g., interconnected via private or public communication networks). Specifically, data centers or data processing centers, herein generally referred to as "data centers," may include a number of interconnected computing systems to provide computing resources to users of the data center. The data centers may be private data centers operated on behalf of an organization or public data centers operated on behalf, or for the benefit of, the general public.

In some instances, the rate at which data can be transmitted over a communication network from a first device to a second device depends on the intermediary devices on the communication network over which the data is passed. The time required to transmit the data between intermediary devices can vary greatly based on the computing resources available to and the configuration of the intermediary devices. In public networks, such as the Internet, intermediary devices are often not under control of either the sending device or receiving device. Moreover, intermediary devices within public networks often operate under pre-established protocols that cannot be easily modified by sending and receiving devices.

In some instances, rapid transmission of information can be facilitated by distributed, interconnected networks of data centers. Illustratively, service providers or content creators (such as businesses, artists, media distribution services, etc.) can employ interconnected data centers, sometimes referred to as "content delivery networks" (CDNs), to deliver content (such as web sites, web content, or other digital data) or provide other services to users or clients. The content may be replicated or distributed among the data centers according to existing routing and addressing technologies, thereby enabling multiple data centers associated with the CDN to provide similar or identical content to client computing devices. In some instances, each data center of a CDN, or any location where it may have computing resources, may be referred to as a point-of-presence ("POP"). A CDN can maintain POPs over a wide area (or worldwide) in an attempt to ensure that a CDN is nearby to any requesting device. This minimizes the number of intermediary devices on public networks that must be utilized when transmitted content from the CDN to the client.

While useful in some instances, the use of CDNs is not necessarily applicable in all data transfers. For example, point-to-point transmission of information that is not intended to be replicated (e.g., transmission of data between a first specific device and a second specific device) generally does not benefit from existing CDN systems. Thus, these data transmissions often utilize conventional techniques (e.g., transmission via public intermediary devices), which results in highly variable, and often decreased, data transmission rates.

Existing prior art includes US 2015/172379, which relates to a system and method for the management of client computing device DNS queries; and US 2013/254269, which relates to a system, method and computer-readable medium for request routing.

### BRIEF DESCRIPTION OF THE DRAWINGS

FIG. 1 is a block diagram depicting an illustrative logical network 100 including computing devices in communication over a public network, and a data transmission system configured to enable high-data-rate transmission of information between the computing devices;
FIG. 2 is a block diagram depicting interactions between a source computing device and the data transmission system of FIG. 1, in order to select a source-side endpoint within the data transmission system for use by the source computing device;
FIG. 3 is a block diagram depicting the transmission of data from the source computing device to a destination computing device, utilizing endpoints within the data transmission system;
FIGS. 4A and 4B are block diagrams depicting interactions for dynamically generating a virtual endpoint within the data transmission system for use by a computing device;
FIGS. 5 is a block diagram depicting interactions for determining that locations of a source computing device, destination computing device, or endpoints within the data transmission system do not meet a set of threshold criteria for use of the data transmission system, and for instructing the source computing device to communicate with the destination computing device over an existing communication network;
FIG. 6 is a flow chart depicting an illustrative routine for selecting a source-side endpoint within a data transmission system for use by a source computing device; and
FIG. 7 is a block diagram depicting an illustrative configuration of one embodiment of an endpoint selector within the data transmission system of FIG. 1.

### DETAILED DESCRIPTION

The invention relates to a system, as further defined in claim 1, and a method, as further defined in claim 6, for enabling high-data-rate transmissions between two devices on a communication network. Specifically, the present disclosure enables two devices connected via a public network (e.g., a global area network (GAN), such as the Internet) to communicate with one another at least partly via a data transmission system expected to provide higher-data-rate transmissions than would be possible using solely the public network. The data transmission system may include a number of geographically distributed endpoints, each of which may communicate with devices on the public network, as well as with one another via a private network. Thus, a source computing device may transmit, via a public network, data to a first endpoint of the data transmission system for delivery to a destination computing device. The data transmission system may transmit the data from the first endpoint to a second endpoint via a private network, and from the second endpoint to the destination computing device via the public network. Because the use of public networks may be limited solely to client communication with endpoints, delays and errors that are common on those public networks may be reduced. Further, because endpoints may be selected such that they are geographically close to client devices, the frequency and effect of those errors and delays may be limited. Still further, the transmission of data between endpoints, rather than transmitting from a source computing device to a destination computing device without the use of endpoints, may increase the data transmission rate of stateful communication protocols such as the transmission control protocol (TCP). To ensure consistent states between sending and receiving devices, stateful communication protocols generally rely on data acknowledgement messages, the speed of which is limited by the round-trip transmission time between the two devices. Thus, by transmitting data via multiple separate stateful connections, the round trip time of each connection may be reduced, and the data-rate of transmissions between a source and destination computing device can be increased.

In some embodiments, the data transmission system may dynamically determine endpoints within the system to be used when transferring data between two computing devices. Illustratively, when a source computing device requests transmission of data to a destination computing device, the data transmission system may determine at least two endpoints to utilize in facilitating the transfer: a first endpoint nearby to the source computing device, and a second endpoint nearby to the destination computing device. By determining endpoints located nearby to both the source and destination computing devices, the use of public networks (e.g., between the source device and the first endpoint and between the second endpoint and the destination computing device) may be limited. As the use of public networks may be more likely to incur errors or delays, minimizing the use of these networks may generally increase the speed of data transmissions.

Proximity of computing devices (e.g., whether a device is "nearby to" or "far from" another device) may be described with respect to network distance, which reflects path used to communication between two devices on a shared communication network. Network distance may refer to any individual metric regarding that path, such as the latency incurred when communicating via the network path or the number of intermediate devices within the network path (e.g., network "hops"). Network distance may also refer to a metric derived from individual network communication metrics or combinations thereof. For example, network distance may refer to a network path's weight or score, which may be calculated based on a combination of latency or hops on that network path, as well as other factors, such as preference values or weights assigned to various paths. As discussed in detail below, embodiments of the present disclosure may utilize network distance to select preferred communication channels over a network (e.g., to select whether to utilize the data transmission system, to select endpoints within the data transmission system to utilize in communicating with source or destination client computing devices, etc.). In addition, embodiments of the present disclosure may utilize other communication metrics alternatively or in addition to network distance, such as the bandwidth of a communication path, the percentage of packet loss occurring over a communication path, the frequency of other errors or delays over the path, the availability of the path (e.g., the frequency that the path stops functioning), the variation in error, packet loss, or availability rates over time (e.g., the consistency of the network). These metrics, including network distance, percentage of packet loss, frequency of errors, or the availability of a path, may be referred to as metrics of "network quality."

In some instances, minimization of network distance or maximization of network quality between a client computing device and the data transmission system may be facilitated by dynamic generation of endpoints. Illustratively, where a client computing device wishes to utilize the data transmission system, but is more than a threshold network distance away from any available endpoint within the data transmission system, the data transmission system may operate to dynamically generate a new endpoint for use by the client computing device. As a further example, a new dynamically generated endpoint may be created when no existing endpoint (or no endpoint within a threshold network distance) provides a communication path of sufficient network quality to the client computing device. These dynamically generated endpoints may be implemented, for example, as virtual computing devices executed by physical computing devices located in data centers operated by the data transmission system. Thus, a client computing device may be enabled to utilize the data transmission system even when no preexisting endpoint exists nearby to the client computing device.

Further, the data transmission system may be configured to attempt to ensure that transmission of data over the data transmission system will occur at a higher data-rate than would otherwise be expected without the use of the data transmission system. Accordingly, when a request is received at the data transmission system to facilitate data transmission between a first and second computing device, the data transmission system may attempt to estimate whether the data transmission would occur more quickly on the data transmission system than on a public network connecting the first and second computing devices. In the instance that the transmission would occur more quickly on the public network, the data transmission system may decline the request by instructing the two computing devices to utilize the public network. Thus, the data transmission system may generally attempt to ensure that the highest data transmission rate is achieved between two computing devices.

The foregoing aspects and many of the attendant advantages of the present disclosure will become more readily appreciated as the same become better understood by reference to the following, when taken in conjunction with the accompanying drawings.

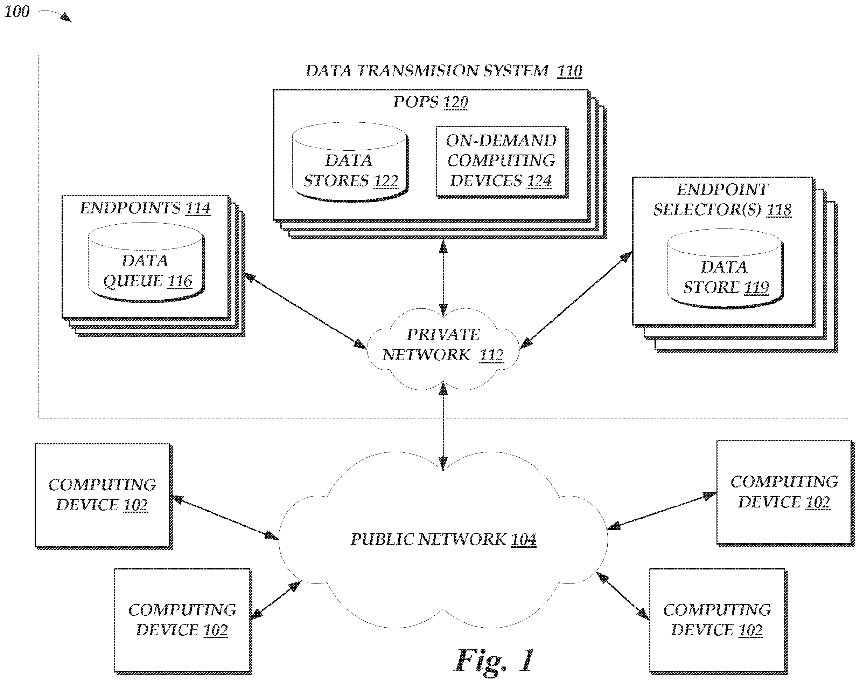

FIG. 1 is a block diagram depicting an illustrative operating environment 100 in which a data transmission system 110 may facilitate transmission of data between various computing devices 102 in communication with the data transmission system 110 via a public network 104. Computing devices 102 may include any number of different computing devices capable of communicating with one another and with the data transmission system 110, including personal computing devices, server computing devices, and virtual computing devices operating on physical host computing devices. For example, individual accessing computing devices may correspond to a laptop or tablet computer, personal computer, wearable computer, server, personal digital assistant (PDA), hybrid PDA/mobile phone, mobile phone, electronic book reader, set-top box, camera, digital media player, and the like. In some instances, a computing device 102 may be operated as a personal device of a user. In other instances, a computing device 102 may implement a network-accessible service, such as a web site, database, or data storage service accessible to other computing devices 102. While shown as individual devices, one or more of the computing devices 102 may be associated with or operate as part of a collection of computing devices 102 configured to implement a desired functionality on the public network 104. Further, while shown as distinct from the data transmission system 110, in some instances computing devices 102 may be associated with or form part of the data transmission system 110, and may communicate with various other components of the data transmission system via a private network 112 (described in more detail below). Thus, computing devices 102 may generally represent any devices utilized to transmit data over the public network 104.

The public network 104 may be any wired network, wireless network, or combination thereof, operating as a collection of autonomous network systems under the control of various entities for use by the various computing devices 102. Illustratively, the public network 104 may include personal area networks, local area networks, wide area networks, cable networks, satellite networks, cellular telephone networks, and combinations thereof. In the example environment of FIG. 1, public network 104 is a global area network (GAN), such as the Internet. Protocols and components for communicating via the other aforementioned types of communication networks are well known to those skilled in the art of computer communications and thus, need not be described in more detail herein. As will be appreciated by one of skill in the art, operation of public networks 104 is generally subject to the operation of each autonomous system within the public network 104, as well as various agreements between autonomous systems regarding how such systems operate. As such, data transmission over a public network 104 may be highly variable and largely unpredictable, often resulting in slow rates of data transmission between computing devices 102, even where both computing devices 102 are otherwise capable of much higher rates of data transmission on the public network 104 generally.

In order to enable higher-speed transmission of data across the public network 104, a data transmission system 110 is described herein that can circumvent portions of the public network 104 that would otherwise delay or slow data transmissions, and that can further optimize communications between computing devices 102 without requiring reconfiguration of the transmission protocols used by those devices 102. As shown in FIG. 1, the illustrative data transmission system 110 includes a plurality of endpoints 114, a plurality of points of presence (POPs) 120, and one or more endpoint selectors 118, each in communication with one another via a private network 112.

The private network 112 may include any combination of various network types described above operated on behalf of the data transmission system 110, alone or in conjunction with other services. While shown as distinct from the public network 104, the private network 112 in some instances may be physically co-mingled with the private network 104. For example, the private network 112 may be formed by one or more leased lines on the public network 104 that provide dedicated communications to the data transmission system 110. Because the private network 112 is operated on behalf of the data transmission system 110 (e.g., independently or in conjunction with other services associated with the data transmission system 110), the number of delays and errors caused by transmission of data across the private network may generally be less than the number of delays and errors caused by transmission of data across the public network 104. Moreover, because the private network 112 is operated on behalf of the data transmission system 110, the functionality of the private network 112 (e.g., the protocols used therein or the configuration of network devices operating as part of the private network 112) may be modified by the data transmission system 110 without reducing the ability of the data transmission system 110 to interact with the public network 104.

Each endpoint 114 may correspond to a computing device, or collection of computing devices, configured to enable data transmission to and from other endpoints 114, as well as the various computing devices 102. In one embodiment, endpoints 114 may operate in pairs (generally referred to as source- and destination-side endpoints 114), and enable two computing devices 102 to communicate via the data transmission system 110. Specifically, a source-side endpoint 114 may be configured to receive a request from a first computing device 102 to transmit data to a second computing device 102. Thereafter, the source-side endpoint 114 may transmit the data a destination-side endpoint 114 nearby to the second computing device. The destination-side endpoint 114, in turn, can transmit the data to the second computing device 102, thus facilitating communication of the first and second computing devices 102 via the data transmission system 110. For example, where a user computing device (e.g., a first computing device 102) wishes to upload a document to a network-based storage service (e.g., operating on a second computing device 102), the user computing device may transmit the document to a first, source-side endpoint 114. The source-side endpoint 114 can then transmit the document to a second, destination-side endpoint 114, which in turn can transmit the document to the network-based storage service. Thus, the user computing device is enabled to upload data to the network-based storage service by use of the data transmission system 110, which may substantially increase the speed and reliability of such uploads. To enable endpoints 114 to maintain a state of connections to computing devices 102 and other endpoints 114, the endpoints 114 include a data queue 116 that can be utilized to store data received (e.g., from a source computing device 102) and awaiting transmission (e.g., to a destination-side endpoint 114). In one embodiment, the data queue 116 may be implemented in transitory memory of an endpoint 114, such as in a memory buffer (e.g., the TCP receive buffer) stored within random access memory ("RAM"). In another embodiment, the data queue 116 may be implemented in whole or in part on non-transitory memory, such as a hard disk drive of the endpoint 114.

The data transmission system 110 further includes one or more endpoint selectors 118 configured to enable a computing device 102 to locate and communicate with an endpoint 114 nearby to the computing device 102. As will be described in more detail below, each endpoint selector 118 may obtain requests from a computing device 102 to transmit information via the data transmission system 110, select an endpoint 114 nearby to the computing device 102, and return an identifier of that endpoint 114 to the request computing device, such that computing device 102 may transmit data over the data transmission system 110 by communicating that data to the endpoint 114. In one embodiment, the endpoint selector 118 may be implemented within a resolution service, such as a domain name service ("DNS") resolver. For example, the endpoint selector 118 may be configured to receive requests from a computing device 102 to resolve an identifier of a destination computing device 102 into a network address (e.g., an internet protocol ["IP"] address), select an endpoint 114 nearby to the computing device 102, and return a network address of the endpoint 114 as a resolution of the request. Thus, the endpoint selectors 118 may enable each computing device 102 to automatically connect to a nearby endpoint 114 of the data transmission system 110 by use of a network identifier of a destination computing device 102, without requiring reconfiguration of the source computing device 102.

To assist in determining an endpoint 114 nearby to a requesting computing device 102, the endpoint selectors 118 can include a data store 119 including information regarding network paths between computing devices 102 and endpoints 114, as well as regarding paths between computing devices 102 themselves or endpoints 114 themselves. Illustratively, the information may include historical data regarding data transmissions across the data transmission system 110, such as a latency of communications, number of hops, bandwidth, or other network quality metrics regarding a path between a computing device 102 and an endpoint 114, between two endpoints 114, or between two computing devices 102. As will be described below, this information may be utilized by the endpoint selectors 118 to determine whether use of the data transmission system 110 is likely to result in higher-data-rate transmission than two computing devices 102 could achieve independently, as well as to determine an endpoint 114 to which a computing device 102 should connect when utilizing the data transmission system 110.

Still further, the illustrative data transmission system 110 of FIG. 1 can include a plurality of points of presence ("POPs") 120. Each POP 120 may include a collection of on-demand computing devices 124 and data stores 122 available to be rapidly provisioned with computer executable instructions in order to implement various functionalities at the request of the data transmission system 110. While shown as part of the data transmission system 110, the POPs 120 may, in some instances, be operated separately from other components of the data transmission system 110 (e.g., as an part of a distinct service sharing a private network 112 with the data transmission system 110). In some instances, the POPs 120 may collectively be referred to as a "cloud computing" environment.

In accordance with embodiments of the present disclosure, the on-demand computing devices 124 within the POPs 120 may be utilized by the data transmission system 110 to dynamically generate virtual endpoints 114. Each virtual endpoint 114 implemented on a POP 120 may operate as an endpoint 114, described above, and therefore enable communication to and from the computing devices 102 and other endpoints 114. The use of virtual endpoints 114 may be beneficial, for example, where no preexisting endpoint 114 is located within a threshold network distance to a computing device 102 requesting use of the data transmission system 110, or when no preexisting endpoint 114 is closer to the computing device 102 than a POP 120. In such instances, the data transmission system 110 may select a POP 120 nearby to the computing device 102, and cause a virtual endpoint 114 to be created within the POP 120. The computing device 102 may thereafter communicate with the data transmission system 110 via the virtual endpoint 114. Thus, data transmission system 110 of FIG. 1 is not limited to the use of preexisting endpoints 114, but may dynamically create virtual endpoints 114 in order to minimize network distance or maximize network quality metrics between the data transmission system 110 and the various source or destination computing devices 102.

It will be appreciated by those skilled in the art that the data transmission system 110 may have fewer or greater components than are illustrated in FIG. 1. In addition, the data transmission system 110 could include various web services and/or peer-to-peer network configurations. Thus, the depiction of the data transmission system 110 in FIG. 1 should be taken as illustrative. For example, in some embodiments, components of the data transmission system 110, such as the endpoint selectors 118, may be executed by one more virtual machines implemented within the POPs 120.

Any one or more of the endpoints 114, endpoint selectors 118, and POPs 120, may be embodied in a plurality of components, each executing an instance of the respective endpoints 114, endpoint selectors 118, and POP 120. A server or other computing component implementing any one of the endpoints 114, endpoint selectors 118, and POPs 120 may include a network interface, memory, processing unit, and computer readable medium drive, all of which may communicate which each other by way of a communication bus. The network interface may provide connectivity over the private network 112, the public network 104, and/or other networks or computer systems. The processing unit may communicate to and from memory containing program instructions that the processing unit executes in order to operate the respective endpoints 114, endpoint selectors 118, and POPs 120. The memory may generally include RAM, ROM, other persistent and auxiliary memory, and/or any non-transitory computer-readable media. While endpoints 114 and endpoint selectors 118 are described above as distinct from the POP 120, some embodiments of the endpoints 114 and endpoint selectors 118 may be implemented by computing devices within the POP 120 (e.g., as virtual machines within the POP 120).

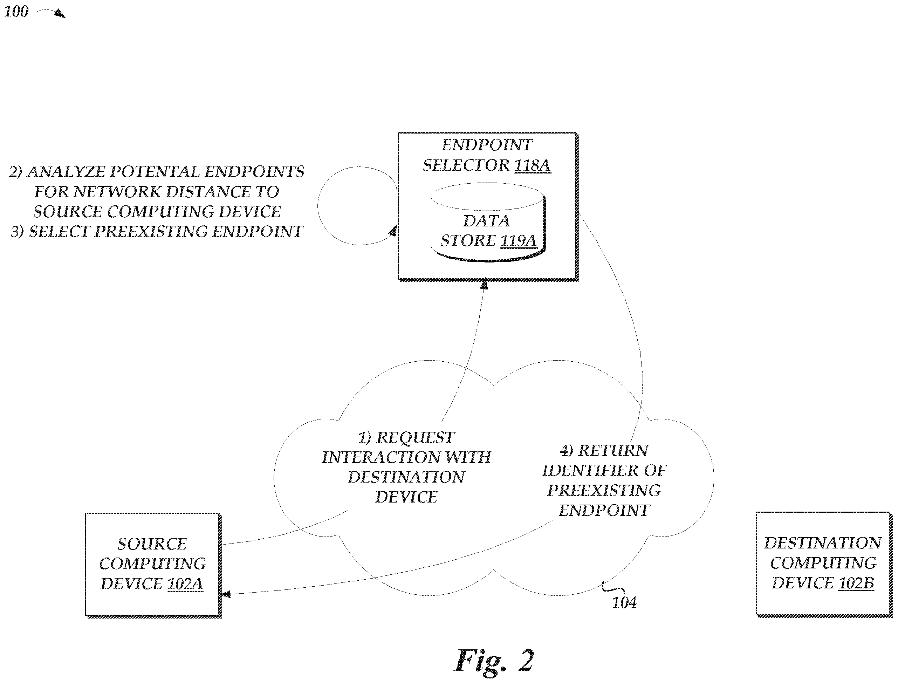

With reference to FIG. 2, an illustrative set of interactions for initiating a connection between a source computing device 102 and the data transmission system 110 will be described. Specifically, the interactions of FIG. 2 depict the use of an endpoint selector 118A within the data transmission system 110 to determine an endpoint 114 nearby to the source computing device 102, and to notify the source computing device 102 of that endpoint. For ease of illustration, components within the data transmission system 110 other than the endpoint selector 118A are omitted from FIG. 2.

The interactions of FIG. 2 begin at (1), where a source computing device 102A transmits a request to the endpoint selector 118A to transmit data to a destination computing device 102B. In one embodiment, the request may be automatically generated by the source computing device 102A in response to instructions to communicate with the destination computing device 102B. For example, where the source computing device 102A has been configured to utilize the data transmission service 110 as a proxy for communication requests, the source computing device 102A may reroute all (or a designated portion) of communication requests to the endpoint selector 118A. As a further example, where the endpoint selector 118A operates as a DNS server, the destination computing device 102A may designate the endpoint selector 118A as an authoritative resolver for an identifier (e.g., a uniform resource identifier, or "URI") of the destination computing device 102B. Thus, when the source computing device 102A attempts to connect to the human-readable identifier of the destination computing device 102B, the source computing device 102A may automatically generate and transmit the request to the endpoint selector 118A.

After receiving a request from the source computing device 102A, the endpoint selector 118A, at (2), analyzes potential endpoints of the data transmission system 110 (e.g., both the preexisting endpoints 114 shown in FIG. 1, as well as potential virtual endpoints that may be dynamically created within the POPs 120 of FIG. 1) to determine an expected network distance between the endpoints 114 and the source computing device 102A. Illustratively, an expected network distance between each endpoint 114 and the source computing device 102A may be determined based at least in part on data within the data store 119A of the endpoint selector. As noted above, the data store 119A may include data regarding prior communications between various computing devices 102 and endpoints 114 of the data transmission system 110. Such data may include, but is not limited to, the latency of communications, the bandwidth available, the number of hops, or other network quality metrics regarding a communication path between the endpoints 114 and various computing devices 102. Thus, the endpoint selector 118A may inspect the data within the data store 119A to determine whether a network distance or network quality metric between the source computing device 102A and any potential endpoint 114 of the data transmission system 110 satisfies a threshold value. In one embodiment, this threshold may be an absolute value (e.g., a latency below 50ms). In other embodiments, the threshold may be relative or variable. For example, the threshold network value may be set based at least in part on the network distance or network quality metrics between the source computing device 102A and a destination computing device 102B (e.g., to ensure that the network distance between the source computing device 102A and a selected endpoint 114 is not greater than the network distance between the source computing device 102A and the destination computing device 102B).

Additionally or alternatively to the use of data within the data store 119, the endpoint selector 118A may in some instances generate data regarding network distance or network quality metrics between the source computing device 102A and potential endpoints 114 within the data transmission system 110 (e.g., preexisting endpoints 114 and potential virtual endpoints 114 within the POPs 120). For example, the endpoint selector 118A may cause each of the endpoints 114 and POPS 120 of FIG. 1 to generate network probes, such as Internet Control Message Protocol ("ICMP") packets, and to transmit those probes to computing devices 102 in order to assess the network distance or network quality metrics between computing devices 102 and the respective endpoints 114 or POPS 120. Thus, the endpoint selector 118A may utilize both passively and actively collected data to determine network distances or network quality metrics between the source computing device 102A and the various potential endpoints 114.

In some embodiments, the endpoint selector 118A may be configured to estimate the network distance or network quality metrics between the source computing device 102A and a potential endpoint, in order to supplement or replace the need for collected network data. In one instance, the endpoint selector 118A may estimate the network distance or network quality metrics between the source computing device 102A and a potential endpoint 114 based on data from similar source computing devices 102, similar endpoints 114, or both. For example, where previously collected data regarding the network distance or network quality metrics between the source computing 102A and a given endpoint 114 does not exist, the endpoint selector 118A may utilize previously collected data regarding the network distance or network quality metrics between the given endpoint 114 and other computing devices 102 originating from similar network addresses as the source computing device 102A (e.g., sharing a common internet service provider ["ISP"]). As a further example, the endpoint selector 118A may estimate network distance between the source computing device 102A and a given endpoint 114 based on the geographical distance between the source computing device 102A and the given endpoint 114 (e.g., as determined based on address geolocation techniques, which are known in the art). Thus, the endpoint selector 118A may function to estimate network distance between the source computing device 102A and potential endpoints 114, even where no data regarding communication between those devices previously exists.

While the examples provided above discuss network distance between a source computing device 102A and potential endpoints 114, the same or similar techniques may be utilized to determine or estimate network distance between any two devices, including between potential endpoints 114 on the data transmission system 110 and between potential endpoints 114 and a destination computing device 102B. As will be discussed below, these network distances may be utilized, for example, to select a destination-side endpoint 114 nearby to a destination computing device 102B, in order to minimize the network distance transmitted data must travel over the public network 104. In addition, while the embodiments of FIG. 2 are discussed with reference to network distance, network quality may additionally or alternatively be utilized to select among potential endpoints 114.

In the illustrative example of FIG. 2, it is assumed that a preexisting endpoint 114 within the data transmission system 110 is located within a threshold network distance of the source computing device 102A. Thus, the endpoint selector 118A, at (4), returns an identifier of that preexisting endpoint 114 to the source computing device 102A. Illustratively, the identifier may include, for example, a network address (e.g., IP address) or URI of the preexisting endpoint 114, which the source computing device 102A may thereafter utilize to connect with the data transmission system 110

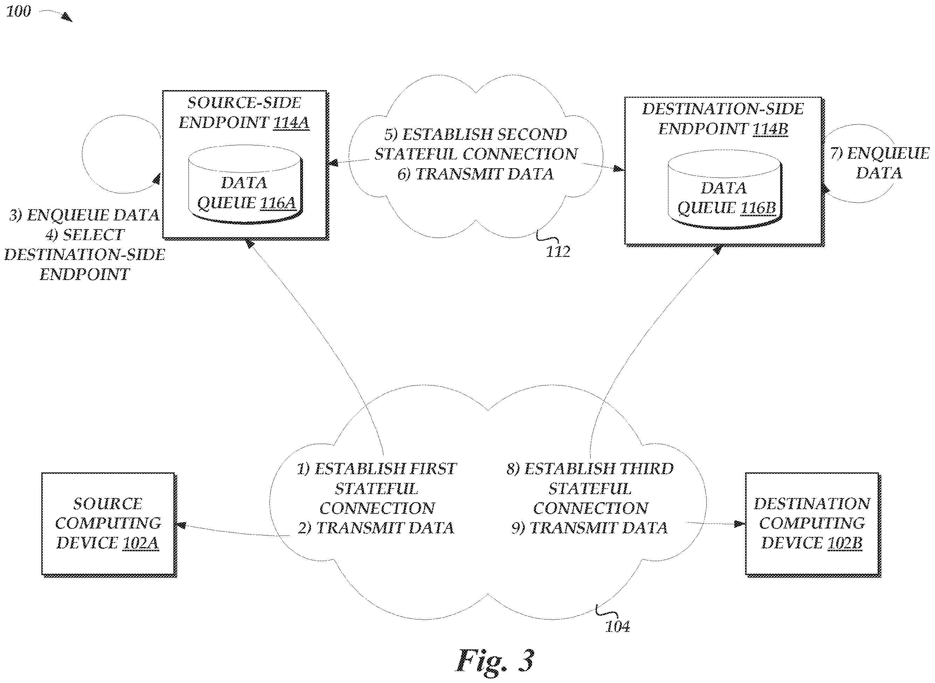

With reference to FIG. 3, illustrative interactions for utilizing endpoints 114 within the data transmission system 110 to transmit information from a source computing device 102A to a destination computing device 102B will be described. Illustratively, the interactions of FIG. 3 may occur subsequently to those of FIG. 2, after the source computing device 102A has been provided with an identifier of a source-side endpoint 114 within the data transmission system 110, shown in FIG. 3 as source-side endpoint 114A.

The interactions of FIG. 3 begin at (1), where the source computing device 102A and the source-side endpoint 114A establish a stateful connection via the public network 104. Stateful connections may be, for example, communication channels in which at least one of a sender and receiver maintain information regarding a state of the connection, such as whether data transmitted via the communication channel was successfully received by a receiving device, and whether an acknowledgement of that receipt was received at a sending device. Illustratively, stateful connections may be established at the network level (e.g., by use of the TCP protocol or other stateful protocol), at the application level (e.g., by utilizing an application that maintains information regarding the state of an underlying protocol that is either stateful or stateless), or with a combination thereof. For ease of discussion, each of the stateful connections described with respect to FIG. 3 will be assumed to be TCP connections. However, the various stateful connections of FIG. 3 may, in some embodiments, utilize different types of stateful connections (e.g., utilizing different network-level protocols, application-level protocols, or combinations thereof).

After establishing the first stateful connection, at (2), the source computing device 102A transmits data to the source-side endpoint 114A via that first stateful connection. Beneficially, because the source-side endpoint 114A is located nearby to the source computing device 102A (e.g., within a threshold network distance, as described above with reference to FIG. 2), the potential for errors and delays caused by the public network 104 is low (e.g., as compared to transmitting data from the source computing device 102A to the destination computing device 102B without the use of endpoints 114). Moreover, because the round trip transmission time between the source-side endpoint 114A and the source computing device 102A is reduced, the time required to transmit data via the first stateful connection is reduced, as is the time required to recover from errors on the first stateful connection. For example, where the first stateful connection corresponds to a TCP connection, the TCP window (a variable which controls how much information may be sent by the TCP protocol without receiving an acknowledgement) may alter rapidly due to a low round-trip communication time, thereby handling the occurrence of errors on the public network 104 more efficiently.

After receiving data at the source-side endpoint 114A, that endpoint 114A enqueues the data into a data queue 116A. In one embodiment, the data queue 116A may be implemented in transitory memory of the source-side endpoint 114A, such as in a memory buffer (e.g., the TCP receive buffer) stored within random access memory ("RAM"). In another embodiment, the data queue 116A may be implemented in whole or in part on non-transitory memory, such as a hard disk drive of the source-side endpoint 114A.

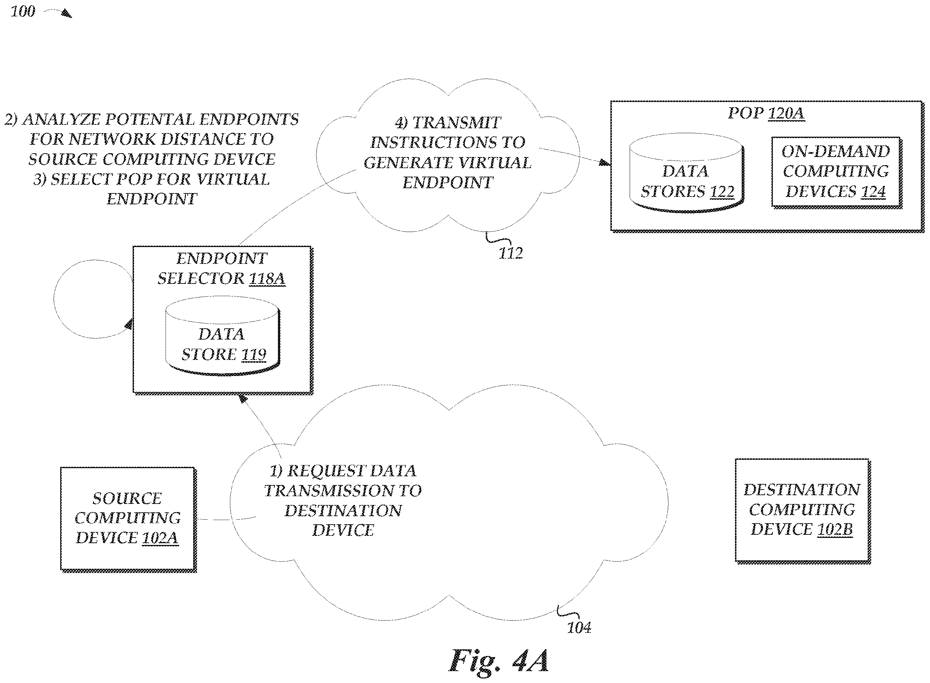

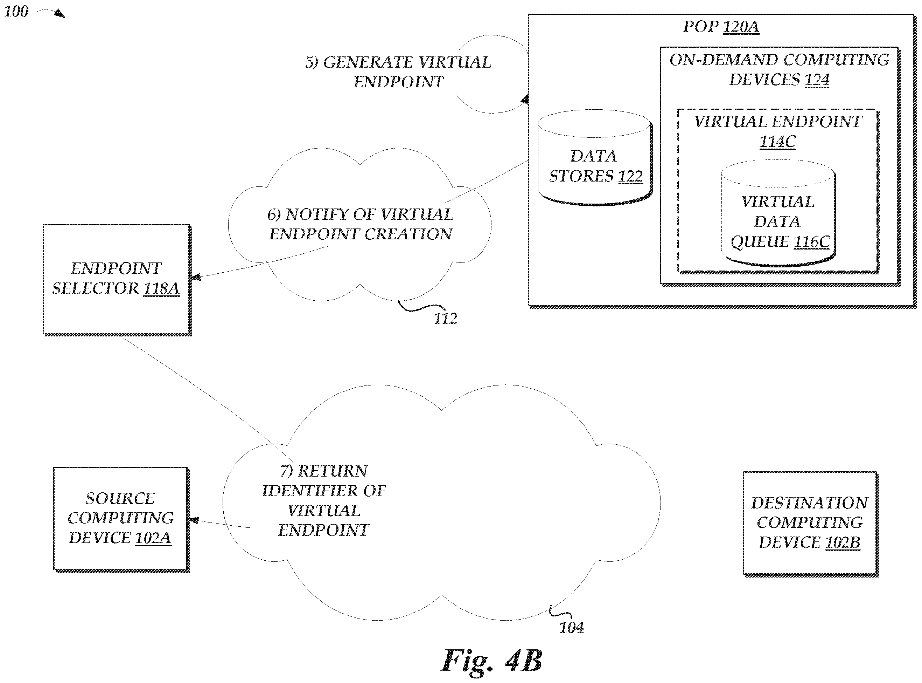

At (4), the source-side endpoint 114A can select a device-side endpoint 114B to utilize in transmitting the data from the data queue 116A to the destination computing device 102B. Illustratively, the source-side endpoint 114A may select, as the destination-side endpoint 114B, any potential endpoint 114 within the data transmission system 110 that is nearby to the destination computing device 102B (e.g., within a threshold distance of the destination computing device 102B). In one embodiment, the source-side endpoint 114A may communicate with an endpoint selector 118 in order to determine a potential endpoint 114 within a threshold network distance to the destination computing device 102B (e.g., similarly to as described above in FIG. 2 with reference to determining a potential endpoint 114 within a threshold distance to the client computing device 102A). Still further, where no destination-side-endpoint exists nearby to the destination computing device 102B, or where a POP 120 exists closer than any pre-existing endpoint 114, the source may cause a new virtual endpoint 114 to be created on a POP 120 nearby to the destination computing device 102B. Interactions for dynamically generating a virtual endpoint 114 are described in more detail below with respect to FIGS. 4A and 4B. In the illustration of FIG. 3, it is assumed that the source-side endpoint 114A has selected a preexisting endpoint 114 of the data transmission system 110, shown in FIG. 3 as destination-side endpoint 114B.

Thereafter, at (5), the source-side endpoint 114A can establish a second stateful connection to the destination-side endpoint 114B (e.g., a TCP connection), via the private network 112. As noted above, because the private network 112 is operated on behalf of the data transmission system 110, the rate or errors or delays on the private network 112 is expected to be low in comparison to the public network 104. As such, in some instances, the source- and destination-side endpoints 114A and 114B may utilize an optimized communication protocol, such as a TCP protocol with a large starting transmission window, or a stateless protocol utilizing application-level state tracking and error correction, to ensure that the second stateful connection provides rapid communication between the source- and destination-side endpoints 114A and 114B.

Thereafter, at (6), the source-side endpoint 114A transmits the data from the data queue 116A (as received from the source computing device 102A and stored in the data queue 116A) to the destination-side endpoint 114B. In some instances, the source-side endpoint 114A may modify the data prior to transmission, such as by modifying header information of the data to note a network identifier of the original source computing device 102A, or otherwise encapsulating the data to ensure information is not lost or modified during transmission of the data through the data transmission system 110.

On receiving the data, the destination-side endpoint 114B, at (7), enqueues the data within its data queue 116B (e.g., as implemented in transitory or non-transitory memory of the destination-side endpoint). Thereafter, the destination-side endpoint 114B, at (8), establishes a third stateful connection (e.g., a third TCP connection) to the destination computing device 102 over the public network 104. At (9), the destination-side endpoint 114B utilizes the third stateful connection to transmit the data from the data queue 116B to the destination computing device 102B.

While not shown in FIG. 3, the source- and destination-side endpoints 114A and 114B may continue to facilitate transfer of information between the source and destination endpoints 102A and 102B over the data transmission service 110. Such transfer of data is generally expected to provide faster and more reliable service than would be achieved over the public network 104 alone. For example, because the data transmission system 110 utilizes a private network 112 between endpoints 114, the total potential for errors and delays between the two devices 102A and 102B is reduced. Moreover, stateful communication protocols are generally limited, at least in part, by the amount of unacknowledged or "in-flight" data allowed by a current state of the connection. For example, the Transmission Control Protocol (TCP) or other stateful communications protocols can use a "sliding window" communication protocol, in which only a set amount of data may be transmitted by a sender before receiving an acknowledgement by the receiver. While such limitations are intended to limit the effect of transmission errors, they can also reduce effective bandwidth of the connection, especially where the round trip transmission time is large. By segmenting transmissions between the source and destination computing devices 102A and 102B into multiple, independent stateful connections, the total amount of in-flight data allowed between the two devices 102A and 102B may be effectively multiplied (e.g., tripled, where two endpoints are used). More specifically, each pair of devices within the segmented network path may establish an independent transmission window, such that each additional, state-aware segment added to an initial point-to-point transmission path increases the total transmission amount of allowed in-flight data by an amount equal to the transmission window allowed on that additional, state-aware segment. Still further, because the network distance between each device 102A and 102B and their respective endpoints 114A and 114B is minimized, the round trip communication times between each device and endpoint 114 is reduced. This reduction in round trip communication times minimizes the effects of errors or delays on the public network 104 (e.g., causing reductions in the amount of "in-flight" data allowed), and increases the ability of each device 102 and endpoint 114 to recover from such delays (e.g., by reducing the time required to negotiate increases in the allowed level of "in-flight" data).

While the illustrative interactions of FIG. 3 are described in sequence, embodiments of the present application may modify the described sequence, omit interactions, or execute one or more interactions in parallel. For example, in one embodiment, interaction (5) (the establishment of a second stateful connection between source-side endpoint 114A and destination-side endpoint 114B) may occur immediately after interaction (1) (the establishment of a first stateful connection between the source computing device 102A and the source-side endpoint 114A). In another embodiment, interaction (5) may occur independently and prior to the other interactions described in FIG. 3. Illustratively, the source-side endpoint 114A may maintain pre-established stateful connections to various endpoints 114, including the destination-side endpoint 114B, such that the stateful connections need not be reestablished when a request to transmit data is received. These pre-established stateful connections may, in some instances, be selected from a pre-established pool of connections used to carry data originating from multiple computing devices 102, thus reducing the number of connections that must be maintained at each endpoint 114A.

Communication between endpoints 114 and computing devices 102 is described with reference to FIG. 3 as occurring via a public network 104. However, in some embodiments, this communication may additionally or alternatively occur on the private network 112. For example, where the destination computing device 102B is associated with the data transmission system 110 or otherwise has access to the private network 112, the third stateful connection may be established on that private network 112, further increasing the speed of data transfer to the destination computing device 102B. Alternatively, where the destination computing device 102B has access to the private network 112, the source-side endpoint 114A may transmit the data to the destination computing device via a stateful connection on that private network 112 without utilization of the destination-side endpoint 114B. In these instances, the destination-side endpoint 114B may be omitted. Various additional alternations of the interactions of FIG. 3 will be apparent to one of skilled in the art, based on the disclosure herein.

As noted above, potential endpoints 114 within the data transmission system 110 include both preexisting endpoints 114, as well as virtual endpoints 114 that may be dynamically created on POPs 120 associated with the data transmission system 110. One set of interactions for creating and utilizing such a virtual endpoint 114 is depicted in FIGS. 4A and 4B. While depicted separately for clarity, the interactions of FIGS. 4A and 4B will be described in conjunction, and numbering will be maintained between the two figures.

The interactions of FIGS. 4A and 4B begin at (1), where a source computing device 102A transmits a request to the endpoint selector 118A to interact with a destination computing device 102B. As discussed above with respect to FIG. 2, the request may be generated by a source computing device 102A in connection with a request to resolve an identifier of the destination computing device 102B (e.g., as a DNS request transmitted by the source computing device 102). The request may further be generated by the source computing device 102A based on a configuration of the source computing device (e.g., to utilize the data transmission service 110 as a proxy in communicating with the destination computing device 102B).

The interactions continue at (2), where the endpoint selector 118A analyzes the network distance between potential endpoints 114 within the data transmission system 110 and the source computing device 102A. As discussed above with respect to FIG. 2, this network distance may reflect the latency and/or number of hops on various network paths between endpoints 114 and the source computing device 102A, and may be calculated based on passively collected network data (e.g., data regarding previous transmissions between the data transmission system 110 and the source computing device 102A or other similar computing devices 102) or actively collected network data (e.g., data regarding network probes, such as ICMP packets, transmitted between the data transmission system 110 and the source computing device 102A). While the embodiments of FIG. 4A are discussed with reference to network distance, any network quality metric or combination of network quality metrics may be utilized by the endpoint selector 118A.

Unlike the interactions of FIG. 2, the results of analysis by the endpoint selector 118A may indicate that no preexisting endpoint 114 is within a threshold network distance to the source computing device 102A, and/or that a POP 120A is within a closer network distance to the source computing device 102A than any preexisting endpoint 114. As such, the endpoint selector 118A may determine that a virtual endpoint 114 should be created on the POP 120A, to enable the source computing device 102A to reach the data transmission system 110 over a minimum network distance. Accordingly, at (3), the endpoint selector 118A may select the POP 120A (e.g., representing the POP 120 with a minimum network distance to the source computing device 102A) for generation of a virtual endpoint 114.

Thereafter, at (4), the endpoint selector 118A can transmit instructions to the POP 120A to generate the virtual endpoint 114. Illustratively, the instructions may notify the POP 120A that a virtual computing device should be created, and that executable code implementing the functionality of an endpoint 114 (e.g., as contained within an executable disk image) should be provisioned onto the virtual computing device. In some instances, the instructions may further notify the POP 120A of various parameters usable by the virtual endpoint 114, such as an identity of the source computing device 102A or a destination computing device 102B with which the source computing device 102A wishes to communicate.

The interactions of FIGS. 4A and 4B then continue in FIG. 4B, where the POP 120A generates a virtual endpoint 114C in response to the received instructions. Illustratively, the virtual endpoint 114C may correspond to a virtual computing device, implemented on one or more host computing devices, provisioned with computer-executable instructions enabling the virtual computing device to carry out the functionalities described herein. As shown in FIG. 4B, the virtual endpoint 114C may include a virtual data queue 116C (e.g., representing a logical mapping to one or more portions of the data stores 122), enabling the virtual endpoint 114C to receive and forward information between the source computing device 102A and a destination computing device 102B.

At (6), the POP 120A can transmit a notification to the endpoint selector 118A that the virtual endpoint 114C has been established. The endpoint selector 118A, in turn, may transmit an identifier of the virtual endpoint 114C to the source computing device 102A. The source computing device 102A may thereafter establish a stateful communication channel to the virtual endpoint 114C on the public network 104, and utilize that communication channel to transmit data, via the data transmission system 110, to a destination computing device 102B. In this manner, the virtual endpoint 114C may function in the same way as a preexisting endpoint 114 (e.g., as described above with respect to FIG. 3).

In some embodiments, timing or ordering of the various interactions of FIG. 4B may be modified from those described above. For example, in order to facilitate rapid responses to client requests, the endpoint selector 118A may be configured to return an identified of the virtual endpoint 114C prior to receiving a notification, from the POP 120, that the virtual endpoint 114C has been created. Illustratively, the identifier of the virtual endpoint 114C may be pre-established, or may be selected by the endpoint selector and transmitted to the POP 120A, such that the endpoint selector 118A need not have received notification of the virtual endpoint 114C's creation prior to providing the identifier to the source computing device 102A. Thus, delays associated with creation of the virtual endpoint 114C may be reduced or eliminated. In one embodiment, the data transmission system 110 may be further configured to detect that a virtual endpoint 114C has not been utilized (e.g., by the source computing device 102A or other computing device 102) for a threshold period of time (e.g., 10 minutes), and to notify the POP 120A that the virtual endpoint 114C may be halted. In other embodiments, the POP 120A itself may be configured to automatically halt the virtual endpoint 114C.

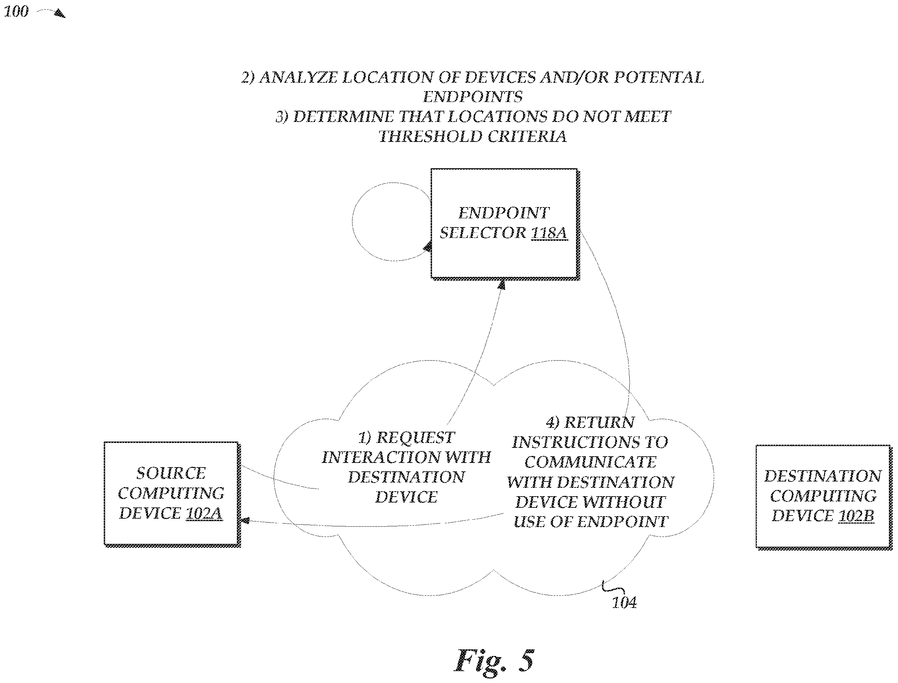

In accordance with aspects of the present disclosure, the data transmission system 110 may be configured such that, when the data transmission system 110 is unlikely to increase the rate of data transmission between a source and destination computing device 102, the data transmission system 110 is not utilized by the source and destination computing devices 102. For example, where the source and destination computing devices 102 are located nearby to one another (e.g., in terms of network distance), use of the data transmission system 110 may not increase data transmission rates between the two devices 102. Accordingly, a set of interactions for determining whether use of the data transmission system 110 is likely to increase rates of transmission between two devices 102 is depicted in FIG. 5.

The interactions of FIG. 5 begin at (1), where a source computing device 102A transmits a request to the endpoint selector 118A to interact with a destination computing device 102B. As discussed above with respect to FIGS. 2 and 4A, the request may be generated by a source computing device 102A in connection with a request to resolve an identifier of the destination computing device 102B (e.g., as a DNS request transmitted by the source computing device 102). The request may further be generated by the source computing device 102A based on a configuration of the source computing device (e.g., to utilize the data transmission service 110 as a proxy in communicating with the destination computing device 102B).

The interactions continue at (2), where the endpoint selector 118A analyzes the locations of the source computing device 102A, the intended destination computing device 102B, and/or potential endpoints 114 within the data transmission system 110 to determine whether those locations meet a set of threshold criteria maintained by the data transmission system 110. In one embodiment, the threshold criteria is based at least in part on a network distance between the source computing device 102A and the destination computing device 102B, such that if the two devices 102A and 102B are less than a threshold network distance apart, the threshold criteria is not satisfied. For example, the threshold criteria may indicate that if a communication path between the two devices 102A and 102B over the public network 104 has a latency of less than 100 milliseconds (ms), the threshold criteria for use of the data transmission system 110 is not satisfied. Threshold criteria regarding the communication path between the two devices 102A and 102B may be established according to any network quality metric.

In another embodiment, the threshold criteria is based at least in part on a network distance between a source or destination computing device 102A or 102B and a closest potential endpoint 114 of the data transmission system 110, such that if no potential endpoint 114 (e.g., a preexisting endpoint 114 or a dynamically created virtual endpoint 114 created within a POP 120) is within a threshold network distance of the respective source or destination computing device 102A or 102B, the threshold criteria is not satisfied. For example, the threshold criteria may indicate that if no endpoint 114 is able to communicate with the source computing device 102A (e.g., over the public network 104) at less than 50 ms, then the threshold criteria for use of the data transmission system 110 is not satisfied. As in the example above, threshold criteria regarding the communication path between the source device 102A and an endpoint 114 may be established according to any network quality metric.

In yet another embodiment, the threshold criteria is based on a comparison of network distances. For example, the data transmission system 110 may define a first network distance as the network distance between the source and destination computing devices 102A and 102B over the public network 104, and define a second network distance as total network distance of a communications path that the source and destination computing devices 102A and 102B would use to communicate, if the data transmission system 110 were employed for that communication (e.g., sum of the network distances between the source computing device 102A and a first endpoint 114, the first endpoint 114 and a second endpoint 114, and the second endpoint 114 and the destination computing device 102B). The data transmission system 110 may further establish threshold criteria specifying that if the first network distance is greater than the second network distance, the threshold criteria are not satisfied. As in the examples above, threshold criteria regarding these communication paths may be established according to any network quality metric.

On determining that the threshold criteria is not satisfied (and thus, that use of the data transmission system 110 is not likely to increase the rate of data transmission between the source and destination computing devices 102A and 102B), the endpoint selector 118A may return to the source computing device 102A instructions to communicate with the destination computing device 102B at least partially outside of the private network 112, for example via traditional communication protocols and over an existing network between the source and destination computing devices. Illustratively, where the endpoint selector 118A serves as a DNS resolver for the source computing device 102A, the endpoint selector 118A may return an network or IP address of the destination computing device 102B or another computing device in the public network 104 (e.g., rather than a network address of an endpoint 114), thereby causing the source computing device 102A to connect with the destination computing device 102B over the public network 102 utilizing convention communication techniques.

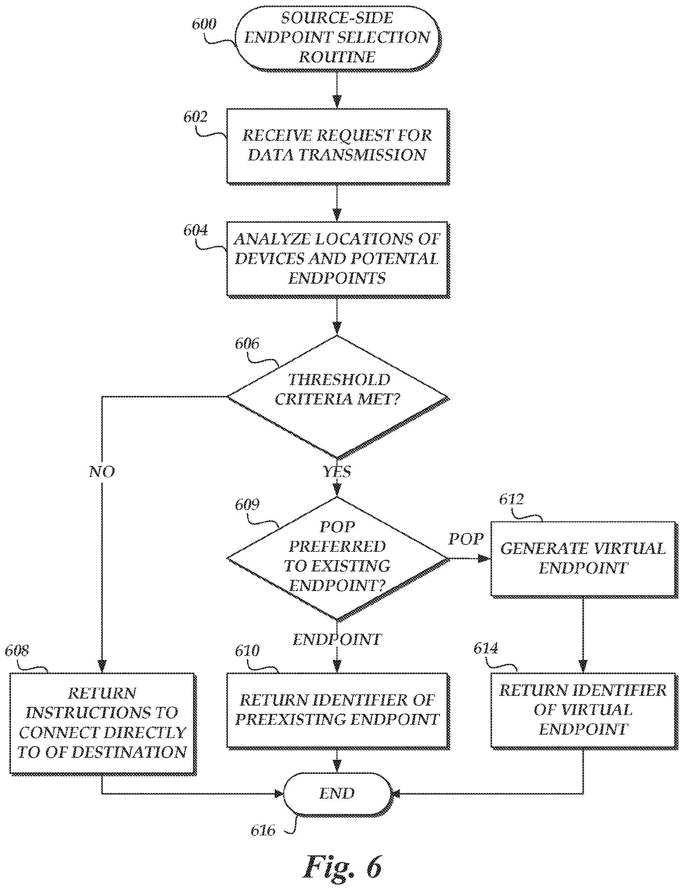

With reference to FIG. 6, one illustrative routine 600 for selecting a source-side endpoint 114 within the data transmission system 110 will be described. The routine 600 may be carried out, for example, by an endpoint selector 118 of FIG. 1, independently or in conjunction with other components of the data transmission system 110.

The routine 600 begins at block 602, where a request is received from a source computing device to initiate communication with a destination computing device. Illustratively, the request may be sent based on a configuration of the source computing device to utilize the data transmission system as a proxy for network communications. Further, the request may be sent as a part of a request to resolve a human-readable identifier (e.g., a URI) for the destination computing device into a network address (e.g., an IP address).

At block 604, the endpoint selector 118 analyzes the location data corresponding to the request, which may include locations of the source and destination computing devices as well as locations of endpoints 114 within the data transmission system 110 to which those devices may connect, to determine whether a set of threshold connection criteria are satisfied. In one embodiment, the threshold criteria may require that the source and destination computing devices are greater than a threshold network distance apart. This threshold network distance may be an absolute value (e.g., such that source and destination computing devices must be more than 100ms in latency apart), or a relative value (e.g., such that the source and destination computing devices must be further apart in network distance than are the source device and an endpoint 114 closest to that source device). Any variety of threshold criteria may be used in an attempt to ensure that communications via the data transmission system 110 occurs in instances when that system is likely to increase data transmission speed, and that the data transmission system 110 is not utilized in other instances.

At block 606, if the endpoint selector 118 determines that the threshold criteria are not met, the routine proceeds to block 608, where the source computing device is instructed to communicate with the destination computing device at least partially outside of the private network (e.g., via traditional communication protocols and over an existing network between the source and destination computing devices). The routine 600 may then end at block 616.

Returning to block 606, if the endpoint selector 118 determines that the threshold criteria are met, the routine 600 proceeds to block 609, where the endpoint selector 118 determines whether a POP 120 is a preferred as communication point for the source computing device over an existing endpoint 114. Illustratively, a POP 120 may be a preferred communication point when the POP 120 is within a shorter network distance to the source computing device than any existing endpoint 114, when a high network quality exists between the POP 120 and the source computing device, or a combination thereof. In the instance that a POP 120 is not a preferred communication point relative to an existing endpoint 114, the routine 600 continues to block 610, where an identifier (e.g., a network address) of the closest existing endpoint 114 to the source computing device is returned to the source computing device. Thereafter, the source computing device may communicate with the destination computing device via existing endpoint 114, as described above. The routine 600 may then end at block 616.

Returning to block 609, if the endpoint selector 118 determines that a POP 120 is a preferred communication point for the source computing device than the existing endpoint 114, the routine 600 proceeds to block 612, where the endpoint selector 118 causes a new virtual endpoint 114 to be created at the POP 120. Illustratively, the endpoint selector 118 may transmit instructions to the POP 120 to provision a virtual machine with a device image including computer-executable instructions that, when executed by the virtual machine, cause the virtual machine to carry out the functionalities of an endpoint 114, as described herein. Thereafter, at block 614, the identifier of the newly created virtual endpoint 114 can be returned to the source computing device. The source computing device can then communicate with the destination computing device via existing endpoint 114, as described above. The routine 600 may then end at block 616.

One skilled in the art will appreciate that the routine 600 may include fewer or more interactions than described above. For example, in some embodiments, a determination of whether threshold criteria for use of the data transmission system 110 are met (e.g., at block 606) may also include identifying whether a POP 120 exists closer to the source computing device than an existing endpoint 114 (e.g., as described with reference to block 609). Thus, in some instances, the operations represented by these blocks may be combined, executed simultaneously, or reversed. Accordingly, the interactions of routine 600 are intended to be illustrative in nature, rather than exhaustive.

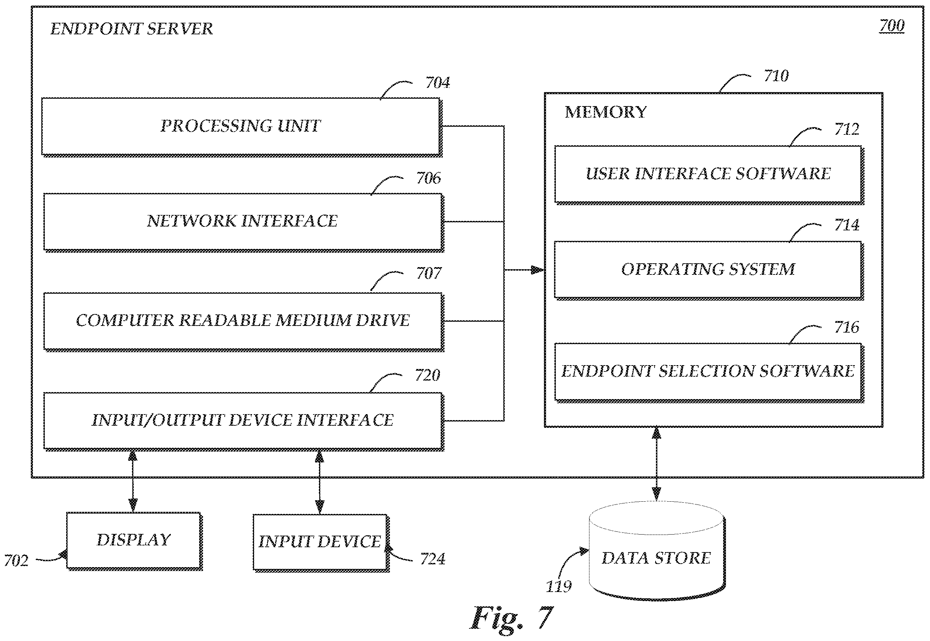

FIG. 7 depicts one embodiment of an architecture of a server 700 that may implement the endpoint selector 118 described herein. The general architecture of server 700 depicted in FIG. 7 includes an arrangement of computer hardware and software components that may be used to implement aspects of the present disclosure. As illustrated, the server 700 includes a processing unit 704, a network interface 706, a computer readable medium drive 707, an input/output device interface 720, a display 702, and an input device 724, all of which may communicate with one another by way of a communication bus. The network interface 706 may provide connectivity to one or more networks or computing systems, such as the public network 104 and/or private network 112 of FIG. 1. The processing unit 704 may thus receive information and instructions from other computing systems or services via a network. The processing unit 704 may also communicate to and from memory 710 and further provide output information for an optional display 702 via the input/output device interface 720. The input/output device interface 720 may also accept input from the optional input device 724, such as a keyboard, mouse, digital pen, etc. In some embodiments, the server 700 may include more (or fewer) components than those shown in FIG. 7. For example, some embodiments of the server 700 may omit the display 702 and input device 724, while providing input/output capabilities through one or more alternative communication channel (e.g., via the network interface 706).

The memory 710 may include computer program instructions that the processing unit 704 executes in order to implement one or more embodiments. The memory 710 generally includes RAM, ROM, and/or other persistent or non-transitory memory. The memory 710 may store an operating system 714 that provides computer program instructions for use by the processing unit 704 in the general administration and operation of the server 700. The memory 710 may further include computer program instructions and other information for implementing aspects of the present disclosure. For example, in one embodiment, the memory 710 includes user interface software 712 that generates user interfaces (and/or instructions therefor) for display upon a computing device, e.g., via a navigation interface such as a web browser installed on the computing device. In addition, memory 710 may include or communicate with one or more auxiliary data stores, such as data store 120.

In addition to the user interface module 712, the memory 710 may include endpoint selection software 716 that may be executed by the processing unit 704. In one embodiment, the endpoint selection software 716 implements various aspects of the present disclosure, e.g., receiving requests for data transmission via the data transmission system 110, to determining whether threshold criteria for use of the data transmission system 110 is met, and returning an identifier of an endpoint 114 within the data transmission system 110 when that threshold criteria is met. While the endpoint selection software 716 is shown in FIG. 7 as part of the server 700, in other embodiments, all or a portion of the software may be implemented individual or collectively by one or more alternative computing devices within the content delivery system 110, such as computing devices within each POP 120.

While FIG. 7 is described above with reference to implementing an endpoint selector 118, the server 700 may additionally or alternatively implement functionality corresponding to the endpoints 114 themselves. Illustratively, the memory 710 may include additional software (not shown in FIG. 7) that contains computer-executable instructions that, when executed by the server 700, causes the server 700 to implement aspects of the present disclosure, e.g., receiving data via a first stateful connection and transmitted data to an additional endpoint 114 or to a destination computing device via a second stateful connection. In other embodiments, all or a portion of the mitigation software may be implemented individually or collectively by one or more alternative computing devices within the content delivery system 110, such computing devices within each POP 120.

All of the methods and processes described above may be embodied in, and fully automated via, software code modules executed by computers or processors. The code modules may be stored in any type of non-transitory computer-readable medium or other computer storage device. Some or all of the methods may alternatively be embodied in specialized computer hardware.

Conditional language such as, among others, "can," "could," "might" or "may," unless specifically stated otherwise, are otherwise understood within the context as used in general to present that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Disjunctive language such as the phrase "at least one of X, Y or Z," unless specifically stated otherwise, is otherwise understood with the context as used in general to present that an item, term, etc., may be either X, Y or Z, or any combination thereof (e.g., X, Y and/or Z). Thus, such disjunctive language is not generally intended to, and should not, imply that certain embodiments require at least one of X, at least one of Y or at least one of Z to each be present.

Unless otherwise explicitly stated, articles such as 'a' or 'an' should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B and C" can include a first processor configured to carry out recitation A working in conjunction with a second processor configured to carry out recitations B and C.

Any routine descriptions, elements or blocks in the flow diagrams described herein and/or depicted in the attached figures should be understood as potentially representing modules, segments, or portions of code which include one or more executable instructions for implementing specific logical functions or elements in the routine. Alternate implementations are included within the scope of the embodiments described herein in which elements or functions may be deleted, or executed out of order from that shown or discussed, including substantially synchronously or in reverse order, depending on the functionality involved as would be understood by those skilled in the art.

## Claims

1. A data transmission system comprising:
one or more computing devices implementing an endpoint selector, the one or more computing devices configured with specific computer-executable instructions to:
receive a request from a first computing device to send data to a second computing device, wherein sending data includes transmission of the data over the data transmission system comprising at least one network transmission endpoint configured with computer-executable instructions to enable computing devices to transmit information to at least one of the network transmission endpoints for forwarding to at least one of another network transmission endpoint or the second computing device;
determine that a network quality metric of a communication path between the first computing device and the at least one network transmission endpoint, does not satisfy a threshold value;
transmit instructions to a point of presence, POP, in communication with the at least one network transmission endpoint to provision a computing device of the POP with software enabling the computing device of the POP to function as a second network transmission endpoint; and
return an identifier of the POP to the first computing device.

2. The system of Claim 1, wherein the threshold value is determined based at least in part on a network distance between the first computing device and the second computing device.

3. The system of Claim 1 or 2, wherein the threshold value is further determined based at least in part on a network distance between the second computing device and the at least one network transmission endpoint.

4. The system of any one of Claims 1 to 3, wherein the request from the first computing device comprises a request to resolve an identifier of the second computing device.

5. The system of any one of Claims 1 to 4, wherein the one or more computing devices are further configured with specific computer-executable instructions to detect that the first computing device has not communicated with the second network transmission endpoint for at least a threshold period of time, and to transmit instructions to the POP to deactivate the second network transmission endpoint.

6. A computer-implemented method comprising:
as implemented by a computing device executing specific computer-executable instructions for implementing an endpoint selector within a data transmission system;
receiving a request from a first computing device to communicate with a second computing device via the data transmission system, the data transmission system comprising at least one network transmission endpoint configured with computer-executable instructions to enable computing devices to transmit information to at least one of the network transmission endpoints for forwarding to at least one of another network transmission endpoint or the second computing device;
determining that a network quality metric between the first computing device and the at least one network transmission endpoint does not satisfy a threshold value;
transmitting instructions to a point of presence, POP, in communication with the at least one network transmission endpoint to provision a computing device of the POP with software enabling the computing device of the POP to function as a second network transmission endpoint; and
returning an identifier of the POP to the first computing device, wherein the first computing device utilizes the identifier of the POP to communicate with the second computing device via the data transmission system.

7. The computer-implemented method of Claim 6 further comprising selecting the POP from a plurality of POPs associated with the data transmission system based at least in part on a network quality metric regarding a communication path between the POP and the first computing device.

8. The computer-implemented method of Claim 6 or 7, wherein the software enabling the computing device of the POP to function as the second network transmission endpoint configures the computing device of the POP to transmit data received from the first computing device to the at least one of another network transmission endpoint for forwarding to the second computing device.

9. The computer-implemented method of Claim 8, wherein the software enabling the computing device of the POP to function as the second network transmission endpoint configures the computing device of the POP to select the at least one of another network transmission endpoint based at least in part on a network distance between the at least one of another network transmission endpoint and the second computing device.

## Patentansprüche

1. Datenübertragungssystem, das Folgendes umfasst:
eine oder mehrere Rechenvorrichtungen, die eine Endpunktauswahleinrichtung implementieren, wobei die eine oder die mehreren Rechenvorrichtungen mit bestimmten computerausführbaren Anweisungen konfiguriert sind zum Empfangen von einer ersten Rechenvorrichtung einer Anforderung, Daten zu einer zweiten Rechenvorrichtung zu senden, wobei das Senden von Daten eine Übertragung der Daten über das Datenübertragungssystem, das mindestens einen Netzübertragungsendpunkt enthält, der mit computerausführbaren Anweisungen konfiguriert ist, um Rechenvorrichtungen zu ermöglichen, Informationen zu mindestens einem Netzübertragungsendpunkt zu übertragen, um sie zu einem weiteren Netzübertragungsendpunkt und/oder der zweiten Rechenvorrichtung weiterzuleiten, umfasst;
Bestimmen, dass eine Netzqualitätsmetrik eines Kommunikationspfads zwischen der ersten Rechenvorrichtung und dem mindestens einen Netzübertragungsendpunkt einen Schwellenwert nicht erfüllt;
Übertragen von Anweisungen zu einem Präsenzpunkt, POP, der mit dem mindestens einen Netzübertragungsendpunkt in Kommunikation ist, um für eine Rechenvorrichtung des POP Software bereitzustellen, die der Rechenvorrichtung des POP ermöglicht, als ein zweiter Netzübertragungsendpunkt zu arbeiten; und
Zurückgeben einer Kennung des POP zur ersten Rechenvorrichtung.

2. System nach Anspruch 1, wobei der Schwellenwert mindestens teilweise auf der Grundlage einer Netzentfernung zwischen der ersten Rechenvorrichtung und der zweiten Rechenvorrichtung bestimmt ist.

3. System nach Anspruch 1 oder 2, wobei der Schwellenwert ferner mindestens teilweise auf der Grundlage einer Netzentfernung zwischen der zweiten Rechenvorrichtung und dem mindestens einen Netzübertragungsendpunkt bestimmt ist.

4. System nach einem der Ansprüche 1 bis 3, wobei die Anforderung von der ersten Rechenvorrichtung eine Anforderung umfasst, eine Kennung der zweiten Rechenvorrichtung aufzulösen.

5. System nach einem der Ansprüche 1 bis 4, wobei die eine oder die mehreren Rechenvorrichtungen ferner mit bestimmten computerausführbaren Anweisungen konfiguriert sind zum Detektieren, dass die erste Rechenvorrichtung für mindestens einen Schwellenwertzeitraum nicht mit dem zweiten Netzübertragungsendpunkt kommuniziert hat, und Übertragen von Anweisungen zum POP, den zweiten Netzübertragungsendpunkt zu deaktivieren.

6. Computerimplementiertes Verfahren, das, wenn es durch eine Rechenvorrichtung, die spezifische computerausführbare Anweisungen zum Implementieren einer Endpunktauswahleinrichtung in einem Datenübertragungssystem ausführt, implementiert wird, Folgendes umfasst:
Empfangen von einer ersten Rechenvorrichtung einer Anforderung, Daten über das Datenübertragungssystem mit einer zweiten Rechenvorrichtung zu kommunizieren, wobei das Datenübertragungssystem mindestens einen Netzübertragungsendpunkt umfasst, der mit computerausführbaren Anweisungen konfiguriert ist, Rechenvorrichtungen zu ermöglichen, Informationen zu mindestens einem Netzübertragungsendpunkt zu übertragen, um sie zu einem weiteren Netzübertragungsendpunkt und/oder der zweiten Rechenvorrichtung weiterzuleiten;
Bestimmen, dass eine Netzqualitätsmetrik zwischen der ersten Rechenvorrichtung und dem mindestens einen Netzübertragungsendpunkt einen Schwellenwert nicht erfüllt;
Übertragen von Anweisungen zu einem Präsenzpunkt, POP, der mit dem mindestens einen Netzübertragungsendpunkt in Kommunikation ist, um einer Rechenvorrichtung des POP Software bereitzustellen, die der Rechenvorrichtung des POP ermöglicht, als ein zweiter Netzübertragungsendpunkt zu arbeiten; und
Zurückgeben einer Kennung des POP zur ersten Rechenvorrichtung, wobei die erste Rechenvorrichtung die Kennung des POP verwendet, um über das Datenübertragungssystem mit der zweiten Rechenvorrichtung zu kommunizieren.

7. Computerimplementiertes Verfahren nach Anspruch 6, das ferner ein Wählen des POP aus mehreren POPs, die dem Datenübertragungssystem zugeordnet sind, mindestens teilweise auf der Grundlage einer Netzqualitätsmetrik hinsichtlich eines Kommunikationspfads zwischen dem POP und der ersten Rechenvorrichtung umfasst.

8. Computerimplementiertes Verfahren nach Anspruch 6 oder 7, wobei die Software, die der Rechenvorrichtung des POP ermöglicht, als der zweite Netzübertragungsendpunkt zu arbeiten, die Rechenvorrichtung des POP konfiguriert, Daten, die von der ersten Rechenvorrichtung empfangen wurden, zu dem mindestens einen eines weiteren Netzübertragungsendpunkts zum Weiterleiten zur zweiten Rechenvorrichtung zu übertragen.

9. Computerimplementiertes Verfahren nach Anspruch 8, wobei die Software, die der Rechenvorrichtung des POP ermöglicht, als der zweite Netzübertragungsendpunkt zu arbeiten, die Rechenvorrichtung des POP konfiguriert, den mindestens einen eines weiteren Netzübertragungsendpunkts mindestens teilweise auf der Grundlage einer Netzentfernung zwischen dem mindestens einen eines weiteren Netzübertragungsendpunkts und der zweiten Rechenvorrichtung zu wählen.

## Revendications

1. Système de transmission de données, comprenant :
un ou plusieurs dispositifs informatiques réalisant un sélecteur de point d'extrémité, les un ou plusieurs dispositifs informatiques étant configurés au moyen d'instructions spécifiques exécutables par ordinateur pour :
recevoir, depuis un premier dispositif informatique, une requête d'envoi de données à un deuxième dispositif informatique, l'envoi de données comportant la transmission des données par l'entremise du système de transmission de données comprenant au moins un point d'extrémité de transmission de réseau configuré au moyen d'instructions exécutables par ordinateur pour habiliter des dispositifs informatiques à transmettre des informations à au moins un des points d'extrémité de transmission de réseau en vue de leur retransmission à au moins un autre point d'extrémité de transmission de réseau ou au deuxième dispositif informatique ;
déterminer qu'une métrique de qualité de réseau d'un trajet de communication entre le premier dispositif informatique et l'au moins un point d'extrémité de transmission de réseau n'atteint pas une valeur seuil ;
transmettre des instructions à un point de présence, noté POP, en communication avec l'au moins un point d'extrémité de transmission de réseau pour pourvoir un dispositif informatique du POP d'un logiciel habilitant le dispositif informatique du POP à jouer le rôle d'un deuxième point d'extrémité de transmission de réseau ; et
renvoyer un identifiant du POP au premier dispositif informatique.

2. Système selon la revendication 1, dans lequel la valeur seuil est déterminée sur la base au moins en partie d'une distance en réseau entre le premier dispositif informatique et le deuxième dispositif informatique.

3. Système selon la revendication 1 ou 2, dans lequel la valeur seuil est déterminée en outre sur la base au moins en partie d'une distance en réseau entre le deuxième dispositif informatique et l'au moins un point d'extrémité de transmission de réseau.

4. Système selon l'une quelconque des revendications 1 à 3, dans lequel la requête depuis le premier dispositif informatique comprend une requête de résolution d'un identifiant du deuxième dispositif informatique.

5. Système selon l'une quelconque des revendications 1 à 4, dans lequel les un ou plusieurs dispositifs informatiques sont configurés en outre au moyen d'instructions spécifiques exécutables par ordinateur pour détecter que le premier dispositif informatique n'a pas communiqué avec le deuxième point d'extrémité de transmission de réseau pendant au moins une période de temps seuil, et pour transmettre au POP des instructions pour désactiver le deuxième point d'extrémité de transmission de réseau.

6. Procédé réalisé par ordinateur, comprenant :
les étapes suivantes, ainsi que réalisées par un dispositif informatique exécutant des instructions spécifiques exécutables par ordinateur pour la réalisation d'un sélecteur de point d'extrémité au sein d'un système de transmission de données ;
la réception, depuis un premier dispositif informatique, d'une requête de communication avec un deuxième dispositif informatique par le biais du système de transmission de données, le système de transmission de données comprenant au moins un point d'extrémité de transmission de réseau configuré au moyen d'instructions exécutables par ordinateur pour habiliter des dispositifs informatiques à transmettre des informations à au moins un des points d'extrémité de transmission de réseau en vue de leur retransmission à au moins un autre point d'extrémité de transmission de réseau ou au deuxième dispositif informatique ;
la détermination qu'une métrique de qualité de réseau entre le premier dispositif informatique et l'au moins un point d'extrémité de transmission de réseau n'atteint pas une valeur seuil ;
la transmission d'instructions à un point de présence, noté POP, en communication avec l'au moins un point d'extrémité de transmission de réseau pour pourvoir un dispositif informatique du POP d'un logiciel habilitant le dispositif informatique du POP à jouer le rôle d'un deuxième point d'extrémité de transmission de réseau ; et
le renvoi d'un identifiant du POP au premier dispositif informatique, le premier dispositif informatique utilisant l'identifiant du POP pour communiquer avec le deuxième dispositif informatique par le biais du système de transmission de données.

7. Procédé réalisé par ordinateur selon la revendication 6, comprenant en outre la sélection du POP parmi une pluralité de POP associés au système de transmission de données sur la base au moins en partie d'une métrique de qualité de réseau relative à un trajet de communication entre le POP et le premier dispositif informatique.

8. Procédé réalisé par ordinateur selon la revendication 6 ou 7, dans lequel le logiciel habilitant le dispositif informatique du POP à jouer le rôle du deuxième point d'extrémité de transmission de réseau configure le dispositif informatique du POP pour qu'il transmettre des données reçues depuis le premier dispositif informatique à l'au moins un autre point d'extrémité de transmission de réseau en vue de leur retransmission au deuxième dispositif informatique.

9. Procédé réalisé par ordinateur selon la revendication 8, dans lequel le logiciel habilitant le dispositif informatique du POP à jouer le rôle du deuxième point d'extrémité de transmission de réseau configure le dispositif informatique du POP pour qu'il sélectionne l'au moins un autre point d'extrémité de transmission de réseau sur la base au moins en partie d'une distance en réseau entre l'au moins un autre point d'extrémité de transmission de réseau et le deuxième dispositif informatique.
